# EUROPEAN PATENT SPECIFICATION

(11) **EP 0 551 246 B1**
(45) Date of publication and mention of the grant of the patent: **16.04.1997**
(21) Application number: 93830002.7
(22) Date of filing: 08.01.1993
(51) Int. Cl.: B60R 1/02

(54) **Two-position wing mirror for vehicles and the like**
In zwei Stellungen dringbarer, seitlicher Fahrzeugrückspiegel
Miroir latéral à position double pour véhicules et similaires

(30) Priority: 09.01.1992 IT FI920002
(43) Date of publication of application: 14.07.1993
(73) Proprietor: Di Odoardo, Mario, I-53100 Siena (IT)
(72) Inventor: Di Odoardo, Mario, I-53100 Siena (IT)
(74) Representative: Mannucci, Gianfranco, Dott.-Ing.

(56) References cited:
- DE-A- 2 036 818
- US-A- 3 438 281
- US-A- 3 519 336
- US-A- 3 664 729
- US-A- 4 171 875
- US-A- 4 639 103
- US-A- 4 971 430
- US-A- 5 033 835

## Description

The invention relates to a wing mirror for vehicles, especially for motor vehicles or the like, with means for changing its tilt as specified in the preamble of claim 1 and as disclosed, for example in US-A-4 639 103 or US-A-4 971 430.

Currently known in the art are wing mirrors of this type which are fitted with electric motor means for setting the position of the mirror as required by the driver. In these wing mirrors of known type the position of the mirror is set initially and not changed again during driving.

Drivers can often find themselves in tricky driving situations as a result of the limited angle of view of wing mirrors, which is typically about 15°. This limited angle of view often means that the mirror is useless because of the position which the vehicle is in relative to the direction of traffic flow.

The subject of the invention is a wing mirror which overcomes the disadvantages of conventional mirrors, especially with respect to their limited angle of view.

Basically, according to the invention, actuator means are fitted to a wing mirror in order to move the said mirror rapidly from at least a first to a second position. The two positions are offset angularly so as to allow two different angles of view in the first and second positions. According to the invention, means for returning the mirror to and stabilising it in one of the said positions are also provided. A mirror of this type offers the following advantage: once the user has adjusted the wing mirror to the most suitable position for driving, the said mirror is held stably in this position until such time as specific driving conditions arise, for example during manoeuvring, and the user wishes to change instantaneously and temporarily the angular position of the mirror. In this case, the driver activates the actuator means which temporarily and rapidly bring the mirror into the changed position which is more suited to the new driving conditions. Once the manoeuvre has been completed, or in any case once the condition necessitating a change in position of the mirror no longer applies, the said mirror is rapidly returned to its initial position.

The said angular positions can be reached by means of angular movements about a substantially vertical axis. According to a possible development of the invention, the mirror can be controlled so as to also reach one or the other of at least two angular positions by means of movements about a substantially horizontal axis substantially parallel to the mirror; according to this development, the mirror is movable virtually about a point, but has two set angular constraints in the form of two axes which are substantially orthogonal to each other.

In order to return the mirror into its normal use position, an elastic traction member may be provided, while the actuator moves the mirror angularly into the second position against the effect of the elastic member. So as to prevent any vibration of the mirror in its normal use position, a means may be provided, in addition to the elastic member, to lock the mirror in the said normal use position or in each of the positions reached.

To this end, a wing mirror in accordance with the present invention is characterised by the features specified in the characterising portion of claim 1.

This locking means may comprise a permanent magnet, a latch controlled by an electromagnet for unlocking the mirror, or equivalent members. The mirror is held in the normal use position as a result of the traction exerted by the magnet on the mirror support or by the latch in its rest position. In this position the elastic member can also be under zero load. The actuator means moves the mirror support into the second position which can be assumed by the mirror, acting so as to overcome, initially the force of attraction of the magnetic means, and subsequently the antagonistic force of the elastic member.

The actuator is preferably an electrically activated means. However, other solutions, for example hydraulic, pneumatic, mechanical or other types of actuator means, are not excluded. The electrical form offers advantages from the point of view of compactness, operational reliability and speed of actuation. In particular, an electromagnet in which the movable armature is constrained to the mirror support can be used as the actuator. Connection between the movable armature of the electromagnet and the said support may be provided by an articulated unit.

The basic concept of the invention can also be combined with a mirror additionally fitted with actuator means for adjusting the position and the tilt of the mirror itself: thus, the actuator means used to move the mirror rapidly from one of its positions to the other can be mounted, together with the mirror support, on a fitment whose position can be set by means of an independent small electric motor of the type conventionally used to adjust the position of wing mirrors. Alternatively, this motor can also be interposed between the support associated with the actuator means for moving the mirror into two alternative positions, and the mirror itself. If two control units are to be provided for moving the mirror about two axes of articulation which are substantially orthogonal to each other, the abovementioned actuator means for adjusting the position and the tilt of the mirror can still be provided.

Further advantageous embodiments of the mirror according to the invention are given in the appended claims.

A clearer understanding of the invention may be gained by reading the description and following the appended drawings which show a non-limiting practical embodiment of the said invention. In the drawings:
Figs. 1 and 2 show a situation in which the use of a mirror according to the invention is particularly useful;
Figs. 7 and 8 show a further embodiment in diagrammatic vertical section and in two positions of the mirror; and
Figs. 9 and 10 show a diagrammatic horizontal section along IX-IX of Fig. 7, in two positions of the mirror.

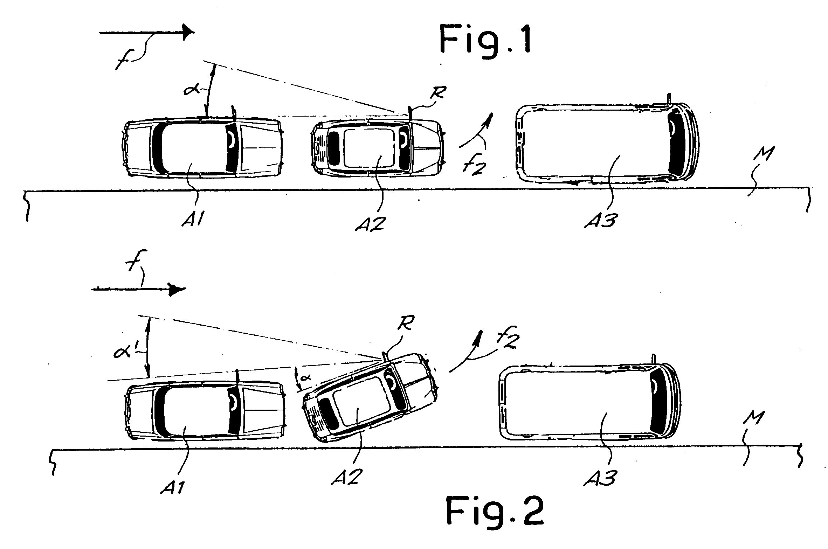

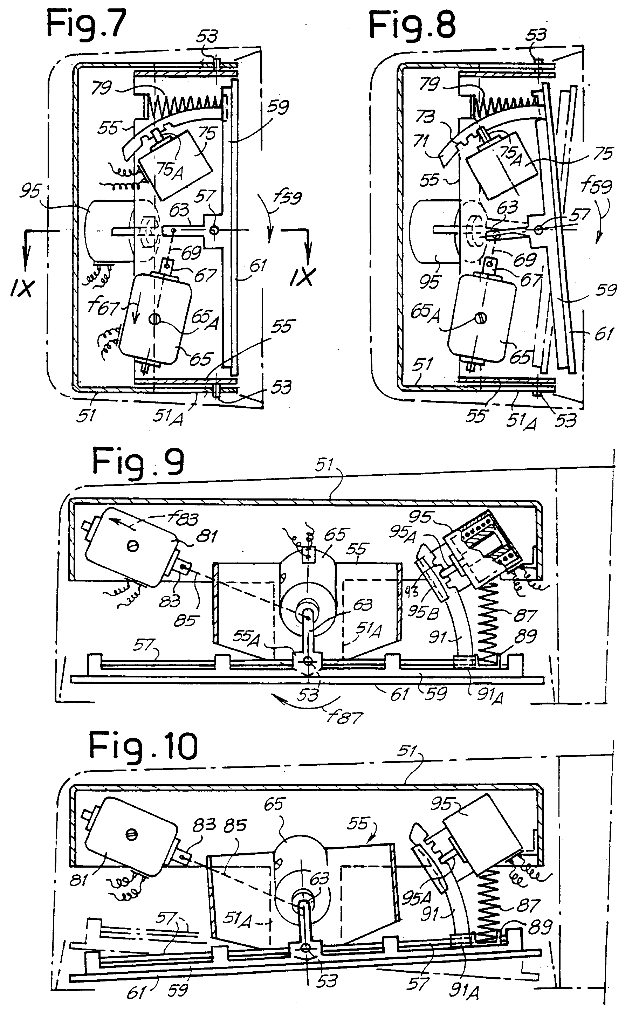

Referring initially to Figs. 1 and 2, there follows a description of a situation in which the use of a wing mirror according to the present invention would prove particularly advantageous. Fig. 1 shows a line of cars A₁, A₂, A₃ parked parallel to a pavement M. Let us assume that the motor car A₂ is to perform a manoeuvre to exit the parking space and join the flow of traffic advancing in the direction of the arrow f. To do this, the driver can check the flow of oncoming motor vehicles by means of the wing mirror R so as to choose a suitable moment to begin the exit manoeuvre. The wing mirror R allows an angle of view α which is typically approximately tangential to the side of the car. The angle α is normally somewhat restricted, approximately 15°. This angle is sufficient to give a view of the situation behind the car and, in particular, of the oncoming vehicles moving in a direction approximately parallel to the longitudinal axis of the motor car on which the wing mirror is mounted. However, once the driver of the motor car A₂ begins the exit manoeuvre in the direction of the arrow f₂, the position of the wing mirror R changes relative to the direction of flow f of the cars travelling along the carriageway where the car A₂ has been parked. Fig. 2 shows an intermediate step in the exit manoeuvre of the motor car A₂, which clearly shows that the angle of view α of the wing mirror R is no longer sufficient to provide an adequate view of the flow of oncoming traffic moving in the direction f since, in this position, the only thing which the driver can see in his wing mirror R is the car A₁ behind him which is stationary in the parking space. The mirror of the invention is so formed as to be able to be moved rapidly from the normal driving position (in which the angle of view α is orientated relative to the motor car A₂ as shown in Fig. 1) to a second position which is offset angularly (for example by approximately 15°) relative to the first position. The angle of view (α') in this second position of the wing mirror is so orientated as to allow a view of the flow on oncoming traffic moving in the direction f, even if the motor car A₂ is not exactly parallel to the direction f. This enables the driver easily to complete the exit manoeuvre from the parking space without having to turn his head to check the flow of oncoming cars. Once the exit manoeuvre from the parking area has been completed and the car has returned to a position in which its longitudinal axis is approximately parallel to the direction of traffic f, the wing mirror R can be returned to its normal use position, i.e. with its angle of view α orientated as shown in Fig. 1.

Figs. 7 et seq. show an embodiment which enables the mirror to be tilted about two axes which are orthogonal to each other and substantially parallel to the plane of the mirror, allowing the mirror to be displaced angularly about an approximately vertical axis and about an approximately horizontal axis, as a result of which the mirror is essentially able to reach at least two positions, tilted about the said two axes, and can therefore be displaced about a point of articulation.

51 indicates as a whole a support casing, on two arms 51A of which are engaged coaxial pivots 53 which define an approximately vertical axis about which an internal frame 55 can be moved. This frame 55 is engaged with a small shaft 57 lying in a plane which is essentially horizontal - and in any case orthogonal to the axis of the pivots 53 - and on which shaft a support 59 of the mirror 61 can be moved angularly. An internal extension 63, approximately orthogonal to the mirror, extends out of the support 59. This extension acts to orientate the fitment formed by the said support 59 and the mirror 61 about the two axes defined by the shaft 57 and by the pivots 53, in the manner indicated below.

An electromagnet 65, which controls the axial movement of an armature 67 along the direction of the arrow f67, is mounted in an articulated manner about point 65A on the internal frame 55. The armature 67 can act on the extension 63 via a tie rod 69. Fixed to the support 59 is a quadrant 71 having its centre on the axis of the shaft 57; the quadrant 71 has a series of at least two locking notches 73; interacting with these notches is the movable member 75A of an electromagnetic latch 75, which is carried by the said internal frame 55. An elastic member 79 in the form of a compression spring reacts between the frame 55 and the support 59 and stresses the support 59 in the direction of the arrow f59 about the shaft 57; the said elastic member 79 is therefore antagonistic relative to the action of the electromagnet 65, which is designed to recall the extension 63 by means of the armature 67 in the direction of the arrow f67, thereby compressing the spring 79. The latch 75 is able to define two or three positions of the support 59 and therefore of the mirror 61, by means of the movable member 75A of the said latch which is inserted in one or other of the notches 73 of the quadrant 71 attached to the support 59. The intermediate position as shown in Fig. 7 (the so-called rest position), of the fitment formed by the support 59 and the mirror 61 is defined by the intermediate notch 73 of the quadrant 71, into which the member 75A of the magnetic latch 75 fits, which member, when at rest, is elastically stressed towards the said quadrant 71, because the electromagnet 75 is de-energised. By energising the electromagnet 65 and briefly also the electromagnet 75 the following occurs: the fitment formed by the support 59 and the quadrant 71 is released by energising the electromagnet 75 and, by energising the electromagnet 65, the armature 67 is recalled in the direction f67 and the support 59 is recalled in the opposite direction to the arrow f59 and therefore against the action of the elastic member 79; thus the support 59 is tilted towards and as far as the position shown in Fig. 8, about the shaft 57. In this position the movable member 75A of the electromagnetic latch 75 fits into the notch 73 to the right (when viewing the drawing) of the intermediate notch in which the movable member 75A had fitted when in the position shown in Fig. 7; in these conditions the fitment formed by the support 59 and the mirror 61 is locked against the recalling action of the armature 67 of the energised electromagnet 65. In order to return the mirror from the position shown in Fig. 8 to the position shown in Fig. 7, all that is required is that the electromagnetic latch 75 be energised momentarily in order to release the fitment 59, 61 (rotating about the axis 57), so that the elastic member 79 causes the said support 59 to move in the direction f59 about the axis of the shaft 57 until the movable member 75A of the latch once again fits into the intermediate notch 73 of the quadrant 71, thereby locking the support in the position shown in Fig. 7. In order to move the fitment formed by the support of the mirror further in the direction of the arrow f59, from the position shown in Fig. 7, all that is required is another pulse on the electromagnetic latch 75 so as to once again disengage the quadrant 71 from the movable member 75A, whereby the elastic member 79 causes further movement in the direction of the arrow f59 until the latch 75A fits into the left-hand (when viewing the drawing) notch 73. Movement in the opposite direction is obtained by activating the electromagnet 65 - which stresses the support 59 in a direction opposite to and greater than that of the spring 79 - and simultaneously releasing the latch 75, 75A.

Mounted onto the casing 51 is an electromagnet 81, whose movable armature 83 can be recalled in the direction of the arrow f83 when the electromagnet 81 is energised. The armature 83 acts on the same extension 63 of the support 59 of the mirror 61 via a tie rod 85. A spring 87 reacts between the casing 51 and a cup 89 which is movable angularly on the shaft 57. The elastic member 89 is a compression spring which can stress the fitment formed by the support 59 in the direction of the arrow f87 about the axis of the shaft 57. Articulated about the shaft 57 is the foot 91A of a second quadrant 91, provided with notches 93 in a similar way to the quadrant 71 (having notches 73), with the difference that on the quadrant 91, the notches are on the outside instead of on the inside. Interacting with the notches 93 of the quadrant 91 is an electromagnetic latch 95 in which the movable member 95A can engage in one or other of the notches 93 as a result of an elastic stress, whereas by electrically energising the electromagnetic latch 95, the movable member 95A can be disengaged from the said notches. The quadrant 91 is guided along a channel 95B formed by the casing of the electromagnetic latch 95, the quadrant 91 being able to slide in the said guide channel 95B as the fitment 59 is displaced about the axis of the pivots 53, on which axis the centre of the quadrant 91 is located (whereas the centre of the quadrant 71 is located on the axis of the shaft 57). When the fitment 59 is to be moved about the horizontal axis defined by the pivots 53, in order to move it from the position shown in Fig. 9 to that shown in Fig. 10, the electromagnet 81 is energised, thereby recalling the armature 83 in the direction of the arrow f83 and the movable member 95A is released from the intermediate notch 93, in which it locked the fitment 59 in the position shown in Fig. 9, by a pulse on the latch 95; in these conditions, the electromagnet 81 recalls the extension 63 - against the action of the spring 87 - thereby moving the fitment 61 in the opposite direction to that of the arrow f87 until it reaches the position shown in Fig. 10, in which the latch 95, being no longer energised after the initial pulse to disengage it, elastically triggers the movable member 95A to click into the notch 93 located to the right of the intermediate notch in which the movable member 95A fitted when in the position shown in Fig. 9; the position shown in Fig. 10 is thus reached, again locked by means of the electromagnetic latch. Movement in the opposite direction is obtained by a first pulse energising the electromagnetic latch 95, thereby releasing the movable member 95A from the notch into which it had fitted when in the position shown in Fig. 10 and causing it to click elastically into the intermediate notch thereby returning the fitment 59 into the position shown in Fig. 9. With a further pulse on the electromagnetic latch 95, the fitment 59 is released from the position shown in Fig. 9 and is caused to continue to move in the direction of the arrow f87, under the action of the elastic member 87, until the movable member 95A reaches the left-hand (when viewing Figs. 9 and 10) notch 93 and clicks therein, locking the fitment 59 in this third position. Movement in the opposite direction is obtained by energising the electromagnet 81, which acts in a direction opposite to and greater than that of the spring 87, simultaneously releasing the latch 95, 95A.

It should be noted that the elastic member 79 and the quadrant 71 have only relative movement along the axis 57 relative to the internal frame 55 on which the elastic member 79 reacts and on which the electromagnetic latch 75 is mounted. Since the fitment 59, 61 can be orientated about the axis of the shaft 57, it has become necessary to provide an articulated support about the axis of the shaft 57 for the cup 89 on which the spring 87 reacts (more suitably than against a rigid shoulder with the fitment 59), and on this axis of the shaft 57, the quadrant 91 is articulated by means of the foot 91A and is not therefore involved in the movement of the fitment 59 about the axis of the shaft 57.

In short, it is possible to move the mirror 61 both about the axis of the shaft 57 which is substantially horizontal, and about the axis defined by the pivots 53 which is substantially vertical; in short, the mirror can be orientated about the point at which the two abovementioned axes cross. In each of the orientations defined by the abovementioned axes, the mirror can assume two angular positions or even three angular positions through the action of the springs 79 and 87 and of the electromagnetic actuators 81 and 65 and with pulses on the magnetic latches 95 and 75 respectively. A programming system may be provided to search for the various positions fixed within the range of tilts which the mirror can adopt, or voluntary commands may be performed for individual operations of energising the electromagnets 65 and 81 and the latches 75 and 95.

## Claims

1. Wing mirror for vehicles, especially for motor vehicles and the like, comprising actuator means (81) to move the said mirror rapidly from a first to a second position, the said two positions being offset angularly, and means (87) for returning the said mirror to and stabilising it in the said first position, characterised in that it comprises means for locking the mirror in each of the positions reached, the said locking means comprising: on the one hand an electromagnetic latch (95) with a movable locking member (95A); on the other hand a quadrant (71, 91) with at least two notches (93) with which, the said movable locking member (95A) interacts; a spring being provided for the control of the latch, which spring stresses the latch elastically and an electrical control being provided to generate an electrical pulse which releases the said movable locking member (95A).

2. Mirror according to claim 1, characterised in that said quadrant (91) comprises at least three notches (93) so as to lock the mirror in the same number of angular positions.

3. Mirror according to claim 1 or 2, characterised in that it comprises: two articulations (53; 57) for a support (59) of the mirror (61) which are orthogonal to each other; an intermediate frame (55) and an outer casing (51); two electromagnetic actuators (65; 81) and two corresponding antagonistic elastic members (79; 87) for rapidly moving the mirror relative to the internal frame (55) and the internal frame (55) relative to the casing (51); and locking means (75, 75A, 71, 73; 95, 95A, 91, 93) having an electromagnetic latch to hold the mirror (61) in at least two positions reached about each of the said articulations (53;57).

4. Mirror according to claim 3, characterised in that the said support (59) comprises an internal extension (63), to which tie rods (69;85) of the two electromagnetic actuators (61; 81) are fastened.

5. Mirror according to claims 1 to 3, characterised in that a quadrant (91) for one of the locking means (95, 95A, 91, 93) can move angularly about the shaft (57) defining one of the articulations (53, 57) and is guided in a channel (95B) formed by the structure of the corresponding electromagnetic latch (95).

6. Wing mirror according to claim 3, characterised in that it comprises additional means (91, 93, 95) which lock the mirror in the said first position, preventing it from vibrating.

7. Wing mirror according to claim 6, characterised in that the said additional means which lock the mirror in the said first position comprise magnetic members (95), preferably a permanent magnet (9).

8. Wing mirror according to one or more of the preceding claims, characterised in that the said actuator means comprise an electrically activated actuator.

9. Wing mirror according to claim 8, characterised in that the said actuator is an electromagnet (81).

10. Wing mirror according to claim 9, characterised in that it comprises an articulated unit (85) for connecting the armature (85) of the electromagnet to the mirror.

## Patentansprüche

1. Verstellbarer Spiegel für Fahrzeuge, insbesondere für Kraftfahrzeuge und dergleichen, umfaßend Betätigungsmittel (81) zur schnellen Bewegung des Spiegels von einer ersten in eine zweite Position, wobei die zwei Positionen um einen Winkel gegeneinander versetzt sind und Mittel (87) zum Zurückbringen des Spiegels in die erste Position und zum Stabilisieren von diesem in der ersten Position, dadurch gekennzeichnet, daß dieser Mittel zum Einrasten des Spiegels in der jeweils erreichten Position beinhaltet, wobei die Einrastmittel einerseits eine elektromagnetische Verriegelungseinrichtung (95) mit einem bewegbaren Einrastelement (95A), andererseits ein Stellelement (71, 91) mit wenigstens zwei Kerben (93), mit welchen das bewegbare Einrastelement (95A) zusammenwirkt, eine zur Bewegung der Verriegelungseinrichtung bereitgestellte Feder, wobei die Feder die Verriegelungseinrichtung elastisch spannt und eine elektrische Regelung, die zur Erzeugung eines elektrischen Impulses für die Freigabe des bewegbaren Einrastelements (95A) bereitgestellt ist, umfassen.

2. Spiegel nach Anspruch 1, dadurch gekennzeichnet, daß das Stellelement (91) wenigstens drei Kerben (93) zur Einrastung des Spiegels in der gleichen Zahl von Winkelstellungen umfaßt.

3. Spiegel nach einem der Ansprüche 1 oder 2, dadurch gekennzeichnet, daß dieser zwei zueinander orthogonal stehende Gelenke (53; 57) für eine Halterung (59) des Spiegels (61), einen Zwischenrahmen (55) mit einem äußeren Gehäuse (51), zwei elektromagnetische Betätigungsmittel (65; 81), zwei gegenwirkende elastische Elemente (79; 87) für eine schnelle Bewegung des Spiegels in Bezug auf den inneren Rahmen (55) und des inneren Rahmens (55) in Bezug auf das äußere Gehäuse (51) und Einrastmittel (75, 75A, 71, 73; 95, 95A, 91, 93), die eine elektromagnetische Verriegelungseinrichtung zum Halten des Spiegels (61) in wenigstens zwei über jedes der Gelenke (53; 57) erreichten Stellungen aufweisen, umfaßt.

4. Spiegel nach Anspruch 3, dadurch gekennzeichnet, daß die Halterung (59) eine innere Verlängerung umfaßt, an welcher Zugstangen (69; 85) der beiden elektromagnetischen Betätigungsmittel (61; 81) befestigt sind.

5. Spiegel nach einem der Ansprüche 1 bis 3, dadurch gekennzeichnet, daß ein Stellelement (91) für eines der Einrastmittel (95, 95A, 91, 93) sich winklig um eine Achse (57) bewegen kann, die eines der Gelenke (53, 57) definiert und in einer Nut (95B) geführt ist, die durch den Aufbau der entsprechenden elektromagnetischen Verriegelungseinrichtung (95) ausgebildet ist.

6. Spiegel nach Anspruch 3, dadurch gekennzeichnet, daß dieser zusätzliche Mittel (91, 93, 95) umfaßt, die den Spiegel zur Verhinderung von Vibrationen in der ersten Stellung einrasten.

7. Spiegel nach Anspruch 6, dadurch gekennzeichnet, daß die zusätzlichen Mittel, die den Spiegel in der ersten Stellung einrasten, magnetische Elemente (95), vorzugsweise einen Permanentmagneten (9) umfassen.

8. Spiegel nach einem oder mehr der vorhergehenden Ansprüche, dadurch gekennzeichnet, daß die Betätigungsmittel ein elektrisch betätigbares Betätigungselement umfassen.

9. Spiegel nach Anspruch 8, dadurch gekennzeichnet, daß das Betätigungselement ein Elektromagnet (81) ist.

10. Spiegel nach Anspruch 9, dadurch gekennzeichnet, daß dieser eine Gelenkeinheit (85) zur Verbindung des Beschlags (85) des Elektromagneten mit dem Spiegel umfaßt.

## Revendications

1. Rétroviseur latéral pour véhicules, en particulier des véhicules à moteur et similaires, comprenant des moyens d'actionnement (81) pour déplacer rapidement ledit rétroviseur d'une première à une seconde position, lesdites deux positions étant décalées de manière angulaire, et des moyens (87) destinés à rappeler ledit rétroviseur dans ladite première position et à le stabiliser dans celle-ci, caractérisé en ce qu'il comprend des moyens destinés à verrouiller le rétroviseur dans chacune des positions atteintes, lesdits moyens de verrouillage comprenant, d'une part un verrou électromagnétique (95) avec un élément de verrouillage mobile (95A) ; et d'autre part un quadrant (71, 91) avec au moins deux encoches (93) avec lesquelles interagit ledit élément de verrouillage mobile (95A) ; un ressort étant prévu pour la commande du verrou, lequel ressort contraint le verrou de manière élastique et une commande électrique étant prévue pour générer une impulsion électrique qui libère ledit élément de verrouillage mobile (95A).

2. Rétroviseur selon la revendication 1, caractérisé en ce que ledit quadrant (91) comprend au moins trois encoches (93) afin de verrouiller le rétroviseur dans le même nombre de positions angulaires.

3. Rétroviseur selon la revendication 1 ou 2, caractérisé en ce qu'il comprend deux articulations (53 ; 57) pour un support (59) du rétroviseur (61) qui sont orthogonales l'une par rapport à l'autre ; un cadre intermédiaire (55) et un boîtier extérieur (51) ; deux actionneurs électromagnétiques (65 ; 81) et deux éléments élastiques (79 ; 87) antagonistes correspondants pour déplacer rapidement le rétroviseur par rapport au cadre intérieur (55) et le cadre intérieur (55) par rapport au boîtier (51) ; et les moyens de verrouillage (75, 75A, 71, 73 ; 95, 95A, 91, 93) ayant un verrou électromagnétique pour retenir le rétroviseur (61) dans au moins deux positions atteintes autour de chacune desdites articulations (53 ; 57).

4. Rétroviseur selon la revendication 3, caractérisé en ce que ledit support (59) comprend un prolongement intérieur (63), auquel sont fixées des biellettes de direction (69 ; 85) des deux actionneurs électromagnétiques (61 ; 81).

5. Rétroviseur selon les revendications 1 à 3, caractérisé en ce qu'un quadrant (91) pour l'un des moyens de verrouillage (95, 95A, 91, 93) peut se déplacer de manière angulaire autour de l'arbre (57) définissant l'une des articulations (53, 57) et est guidé dans un canal (95B) formé par la structure du verrou électromagnétique (95) correspondant.

6. Rétroviseur selon la revendication 3, caractérisé en ce qu'il comprend des moyens supplémentaires (91, 93, 95) qui verrouillent le rétroviseur dans ladite première position, l'empêchant de vibrer.

7. Rétroviseur selon la revendication 6, caractérisé en ce que lesdits moyens supplémentaires qui verrouillent le rétroviseur dans ladite première position comprennent des éléments magnétiques (95), de préférence un aimant permanent (9).

8. Rétroviseur selon l'une ou plusieurs des revendications précédentes, caractérisé en ce que lesdits moyens d'actionneur comprennent un actionneur actionné électriquement.

9. Rétroviseur selon la revendication 8, caractérisé en ce que ledit actionneur est un électroaimant (81).

10. Rétroviseur latéral selon la revendication 9, caractérisé en ce qu'il comprend une unité articulée (85) pour relier l'armature (85) de l'électro-aimant au rétroviseur.
